Europäisches Patentamt

European Patent Office

Office européen des brevets

(11) Publication number: **0 562 225 A2**

# EUROPEAN PATENT APPLICATION

(21) Application number: 93100288.5

(51) Int. Cl.⁵: **A23K  3/00**

(22) Date of filing: 22.01.91

This application was filed on 11 - 01 - 1993 as a divisional application to the application mentioned under INID code 60.

(30) Priority: 29.01.90 SE 9000300

(43) Date of publication of application:
**29.09.93 Bulletin  93/39**

(60) Publication number of the earlier application in accordance with Art.76 EPC: **0 465 629**

(84) Designated Contracting States:
**AT BE CH DE DK ES FR GB GR IT LI LU NL SE**

(71) Applicant: **KEMIRA KEMI AKTIEBOLAG**
**P.O. Box 902**
**S-251 09 Helsingborg(SE)**

(72) Inventor: **Muller, Arthur**
**Bärnstensgatan 19 C**
**S-253 68 Helsingborg(SE)**
Inventor: **Nilsson, Torsten**
**Hälsögatan 5**
**S-253 72 Helsingborg(SE)**

(74) Representative: **Inger, Lars Ulf Bosson**
**L + U INGER Patentbyra AB Garvaregatan 12**
**S-262 00 Ängelholm (SE)**

(54) Acidifying composition containing diatom aceous earth.

(57) The present invention relates to an acidifying composition comprising an acid and an absorbent for the ensilage of green fodder, whereby the absorbent consists of diatomaceous earth, to which absorbent an acid has been absorbed.

Technical field

The present invention relates to an acidifying composition for ensilage purpose.

The object of the present invention is to obtain an acidifying composition for the ensilage of green fodder.

Background of the invention

It is known to use so called AIV acid (named after the Finnish researcher A.I. Virtanen) for the ensilage of green fodder, whereby the AIV acid consists of a mixture of hydrochloric acid (14%) and sulphuric acid (30%) and is in a concentrated form 16N. AIV acid is added to the green fodder in order to obtain a preservation of the fodder. The problem using AIV acid is, however, its high strength, which causes great working environmental problems. Even if the acid is diluted to 2N the working environment becomes unsatisfactory.

It is thus a general desire to be able to ensilage green fodder under good conditions with regard to working environment.

It is a general desire that feed stuff components shall be in granular or pelletized form for simple handling and blending and a dust free environment.

It is thus a desire to find such types of acidifying compositions.

Description of the present invention.

It has now surprisingly been found possible to be able to solve these problems by means of the present invention which consists of a mechanical mixture of an acid and an absorbent and is characterized in that the absorbent consists of diatomaceous earth, preferably in the form of "moler", to which up to 150 % by weight of acid in the form of AIV acid have been absorbed.

Further characteristics are evident from the accompanying claims.

By means of the present invention a non-baking, tacky-free, free flowing granulate having a high acid content and thereby a high acidifying ability is obtained.

Diatomaceous earth is the geological name of a naturally occurring mixture of diatoms and clay. Such a mixture is present in the Limfjorden, Denmark, whereby this quality is named "moler", where it is dug in mines on the islands of Mors and Fur. Diatomaceous earth was sedimented on the sea bottom more that 50 milj years ago and simultaneously with this sedimentation an admixture of clay took place. Diatoms are silicon algae the skeletons of which have a very high capillarity.

Diatomaceous earth can be oven dried to a moisture content of 3 to 6 % but preferably be calcined to a moisture content of 0.5 to 2 % as well, whereby the chemically bound water is driven off.

A granule size of 0.1 to 2, preferably 0.2 to 1 mm, is a suitable fraction size to be utilized in the present composition.

The present composition is readily prepared by spraying the intended amount of AIV acid onto granules of diatomaceous earth, preferably "moler", oven dried or calcined, in e.g. a Pascal mixer or another suitable mixer. Spraying can be made in any suitable industrial way.

The acidifying composition thus contains a mechanical admixture of diatomaceous earth, such as "moler", and AIV acid where the acid has been absorbed in the capillaries of the diatomaceous earth.

The composition is added to the green fodder with regard to ensilage. In the green fodder the AIV acid diffuses and acidifies and preserves the same. In the green fodder the diatomaceous earth will only become a ballast and as the composition is present in a considerably small amount this ballast has no influence on the feed stuff or the digestion. The composition is added as an ensilage agent in an amount of 1.5 to 4 kg per ton green fodder, only, depending on the strength of acid being used.

Other absorbents which have been discussed for the present purpose are attapulgite, sepiolite (fibrous clays), erionite (a zeolite), and wollastonite ( mica material). All these, however, show cancerous properties and are thus unsuitable. Such properties are not shown by the present diatomaceous earth.

It has all surprisingly been found that the water solubility of side components present in the moles decreases after absorption of the phosphoric acid. This is evident from the table below where the water solubility of certain elements has been analysed in the ingoing material of moles, as well as in the final product.

TABLE

Solubility in water of components present in diatomaceous earth (D.E.) and in the composition of the present invention.

| Element | Amount | (D.E.) | Comp. of the present invention |
|---------|--------|--------|-------------------------------|
| Fe | % | 5.8 | 1.1 |
| Na | % | 0.18 | 0.058 |
| F | ppm | 480 | 21 |
| Zn | " | 95 | 29 |
| Cu | " | 130 | 17 |
| Ni | " | 25 | 3 |
| Mn | " | 310 | 65 |
| Cr | " | 140 | 20 |
| As | " | 11 | 1.9 |
| Pb | " | 6 | 1 |

As evident from the above data the amount of water soluble elements is considerably lower in the final composition than in the starting material. This means per se a further advantage using the present invention.

The composition according to the invention can be dry mixed into green fodder and be administered as such, whereby the physical form of the composition, as free flowing granules, makes it very easy to dose.

At ensilage 1.5 to 4 kg of acidifying composition are added per ton of green fodder. The concentration of the AIV acid can thereby be varied from 16N to 8N or lower depending on i.a. the fine particulate size of the composition with regard to distribution and on the water content of the green fodder with regard to the dilution. pH of the green fodder shall be below 3 in order to obtain an acceptable preservation. Acceptable results have been achieved using 1.7 kg of the composition per ton of green fodder when the acid absorbed was 16N, as well as acceptable results have been achieved using 3.0 kg of the composition when the acid was 8N.

## Claims

1. Acidifying composition comprising an acid and an absorbent for ensilage of green fodder, **characterized** in that the absorbent consists of diatomaceous earth and that the acid is so called AIV acid, consisting of hydrochloric acid and sulphuric acid.

2. Composition according to claim 1, **characterized** in that 75 to 150 parts per weight of AIV acid have been absorbed per 100 parts per weight of diatomaceous earth.

3. Composition according to claims 1 and 2, **characterized** in that it contains 8 to 16N AIV acid.

4. Composition according to claims 1 to 3, **characterized** in that the diatomaceous earth consists of a fraction having a particle size of 0.1 to 2 mm, preferably 0.2 to 1 mm.

5. Composition according to claims 1 to 4, **characterized** in that the diatomaceous earth has been calcined prior to absorption of acid.